# EUROPEAN PATENT APPLICATION

(11) **EP 4 723 559 A1**
(43) Date of publication of application: **08.04.2026**
(21) Application number: 25199864.7
(22) Date of filing: 03.09.2025
(51) Int. Cl.: H04L 12/12, H04L 12/40

(54) **SELECTIVE ACTIVATION OF DUAL-STANDARD COMMUNICATION UNITS IN VEHICLE ECUS**

(30) Priority: 02.10.2024 JP 2024173439
(71) Applicant: TOYOTA JIDOSHA KABUSHIKI KAISHA, Toyota-shi, Aichi-ken 471-8571 (JP)
(72) Inventor: TAKAISHI, Daisuke, Toyota-shi, 471-8571 (JP); FURUKAWA, Hisashi, Toyota-shi, 471-8571 (JP)
(74) Representative: J A Kemp LLP

(57) **Abstract**

An electronic control unit includes communication units configured to be switched between a standby state, in which a communication function is restricted, and an active state, in which the restriction of the communication function is lifted. The communication units include a first communication unit (13) and a second communication unit (14) that execute first communication and second communication, respectively. The electronic control unit shifts the first communication unit (13) from the standby state to the active state in response to receiving a first activation notification through the first communication. The electronic control unit sends a second activation notification, which is a message requesting activation of the second communication unit (14) of another other electronic control unit, through the first communication and then starts the second communication with another electronic control unit.

## Description

### CROSS-REFERENCE TO RELATED APPLICATIONS

This application is based upon and claims the benefit of priority from Japanese Patent Application No. 2024-173439, filed on October 2, 2024, the entire contents of which are incorporated herein by reference.

### BACKGROUND

### 1. Field

The present disclosure relates to an electronic control unit, an in-vehicle network system, a communication method, and a communication program.

### 2. Description of Related Art

JP2022-69980A discloses an in-vehicle network system. The in-vehicle network system includes electronic control units (hereinafter referred to as ECUs).

The ECUs mutually perform controller area network (CAN) communication using a CAN communication standard. Each ECU includes a communication unit that performs CAN communication. The communication unit of each ECU is switchable between a standby state, in which communication with another ECU is restricted to reduce power consumption, and an active state, in which the restriction is lifted.

Each ECU has a network management function. Each ECU shifts the communication unit from the standby state to the active state upon receiving an activation request message from another ECU through CAN communication.

Each ECU may support CAN and Ethernet^{®} as a communication standard. In such a case, each ECU includes two types of communication units: a first communication unit that performs CAN communication and a second communication unit that performs Ethernet^{®} communication. In the same manner as the first communication unit, the second communication unit is switchable between the standby state and the active state.

When receiving an activation request message through CAN communication, the ECU may shift not only the first communication unit but also the second communication unit to the active state. It is desirable that the ECU shift the second communication unit to the active state only when performing Ethernet^{®} communication.

### SUMMARY

This Summary is provided to introduce a selection of concepts in a simplified form that are further described below in the Detailed Description. This Summary is not intended to identify key characteristics or essential characteristics of the claimed subject matter, nor is it intended to be used as an aid in determining the scope of the claimed subject matter.

An electronic control unit according to an aspect of the present disclosure is one of multiple electronic control units included in an in-vehicle network system. The electronic control unit includes communication units each configured to be switched between a standby state, in which a communication function is restricted, and an active state, in which the restriction of the communication function is lifted. The communication units include a first communication unit configured to execute first communication that is based on a first communication standard and a second communication unit configured to execute second communication that is based on a second communication standard. The second communication standard is different from the first communication standard. The electronic control unit has a network management function of shifting the first communication unit from the standby state to the active state in response to receiving a first activation notification through the first communication. The first activation notification is a message requesting activation of the first communication unit. The electronic control unit is configured to send a second activation notification through the first communication. The second activation notification is a message requesting activation of the second communication unit of an other electronic control unit. The electric control unit is configured to start the second communication with the other electronic control unit after sending the second activation notification.

An electronic control unit according to an aspect of the present disclosure is one of multiple electronic control units included in an in-vehicle network system. The electronic control unit includes communication units each configured to be switched between a standby state, in which a communication function is restricted, and an active state, in which the restriction of the communication function is lifted. The communication units include a first communication unit configured to execute first communication that is based on a first communication standard and a second communication unit configured to execute second communication that is based on a second communication standard, The second communication standard is different from the first communication standard. The electronic control unit has a network management function of shifting the first communication unit from the standby state to the active state in response to receiving a first activation notification through the first communication. The first activation notification is a message requesting activation of the first communication unit. The electronic control unit is configured to shift the second communication unit from the standby state to the active state in response to receiving a second activation notification from an other electronic control unit through the first communication. The second activation notification is a message requesting activation of the second communication unit.

An in-vehicle network system, according to an aspect of the present disclosure includes the electronic control units including at least a first electronic control unit and a second electronic control unit. Each of the electronic control units of the in-vehicle network system comprises communication units each configured to be switched between a standby state, in which a communication function is restricted, and an active state, in which the restriction of the communication function is lifted. The communication units include a first communication unit configured to execute first communication that is based on a first communication standard and a second communication unit configured to execute second communication that is based on a second communication standard. The second communication standard is different from the first communication standard. Each of the electronic control units has a network management function of shifting the first communication unit from the standby state to the active state in response to receiving a first activation notification through the first communication. The first activation notification is a message requesting activation of the first communication unit. The first electronic control unit is configured to send a second activation notification through the first communication. The second activation notification being a message requesting activation of the second communication unit of the second electronic control unit. The first electronic control unit is configured to start the second communication with the second electronic control unit after sending the second activation notification. The second electronic control unit is configured to shift the second communication unit from the standby state to the active state in response to receiving the second activation notification through the first communication.

A communication method for an in-vehicle network system according to an aspect of the present disclosure is provided. The in-vehicle network system includes at least a first electronic control unit and a second electronic control unit. Each of the first and second electronic control units includes communication units each configured to be switched between a standby state, in which a communication function is restricted, and an active state, in which the restriction of the communication function is lifted. The communication units include a first communication unit configured to execute first communication that is based on a first communication standard and a second communication unit configured to execute second communication that is based on a second communication standard. The second communication standard is different from the first communication standard. Each of the first and second electronic control units has a network management function of shifting the first communication unit from the standby state to the active state in response to receiving a first activation notification through the first communication. The first activation notification is a message requesting activation of the first communication unit. The communication method includes sending, by the first electronic control unit, a second activation notification through the first communication. The second activation notification is a message requesting activation of the second communication unit of the second electronic control unit. The communication method includes starting, by the first electronic control unit, the second communication with the second electronic control unit after sending the second activation notification. The communication method includes shifting, by the second electronic control unit, the second communication unit from the standby state to the active state in response to receiving the second activation notification through the first communication.

A communication program according to an aspect of the present disclosure is executed by processing circuitry of each of multiple electronic control units included in an in-vehicle network system. Each of the electronic control units includes communication units each configured to be switched between a standby state, in which a communication function is restricted, and an active state, in which the restriction of the communication function is lifted. The communication units include a first communication unit configured to execute first communication that is based on a first communication standard and a second communication unit configured to execute second communication that is based on a second communication standard. The second communication standard is different from the first communication standard. Each of the electronic control units has a network management function of shifting the first communication unit from the standby state to the active state in response to receiving a first activation notification through the first communication. The first activation notification is a message requesting activation of the first communication unit. The communication program is configured to cause the processing circuitry of each of the electronic control units to send a second activation notification through the first communication. The second activation notification is a message requesting activation of the second communication unit of an other electronic control unit. The communication program is configured to cause the processing circuitry of each of the electronic control units to start the second communication with the other electronic control unit after sending the second activation notification.

A communication program according to an aspect of the present disclosure is executed by processing circuitry of each of multiple electronic control units included in an in-vehicle network system. Each of the electronic control units includes communication units each configured to be switched between a standby state, in which a communication function is restricted, and an active state, in which the restriction of the communication function is lifted. The communication units include a first communication unit configured to execute first communication that is based on a first communication standard and a second communication unit configured to execute second communication that is based on a second communication standard. The second communication standard is different from the first communication standard. Each of the electronic control units has a network management function of shifting the first communication unit from the standby state to the active state in response to receiving a first activation notification through the first communication. The first activation notification is a message requesting activation of the first communication unit. The communication program is configured to cause the processing circuitry of each of the electronic control units to shift the second communication unit from the standby state to the active state in response to receiving a second activation notification from an other electronic control unit through the first communication. The second activation notification being a message requesting activation of the second communication unit.

Other features and aspects will be apparent from the following detailed description, the drawings, and the claims.

### BRIEF DESCRIPTION OF THE DRAWINGS

Fig. 1 is a schematic diagram illustrating the configuration of an in-vehicle network system according to a first embodiment.
Fig. 2 is a schematic diagram illustrating the configuration of each of the first device, the second device, the fifth device, and the sixth device shown in Fig. 1.
Fig. 3 is a schematic view illustrating the configuration of the third device shown in Fig. 1.
Fig. 4 is a sequence diagram illustrating how a PN device sends a message to another PN device.
Fig. 5 is a sequence diagram illustrating how an NM device sends a message to a PN device.
Fig. 6 is a sequence diagram illustrating how an NM device sends a message to another NM device.
Fig. 7 is a sequence diagram illustrating how a PN device sends a message to an NM device.
Fig. 8 is a table summarizing, for each type of ECU, how the ECU activates the second communication unit or the relay unit in a conventional in-vehicle network system.
Fig. 9 is a table summarizing, for each type of ECU, how the ECU activates the second communication unit or the relay unit in a conventional in-vehicle network system that is different from the one shown in Fig. 8.
Fig. 10 is a sequence diagram illustrating how the first device shown in Fig. 1 communicates with the second device.
Fig. 11 is a sequence diagram illustrating how the first device shown in Fig. 1 communicates with the third device.
Fig. 12 is a table illustrating an example of the activation request signal sent by each ECU shown in Fig. 1.
Fig. 13 is a flowchart illustrating a series of processes executed when each ECU shown in Fig. 1 sends the activation request signal to another ECU.
Fig. 14 is a flowchart illustrating a series of processes executed when each ECU shown in Fig. 1 receives the activation request signal from another ECU.
Fig. 15 is a flowchart illustrating a series of processes executed when each ECU shown in Fig. 1 switches the activation flag to OFF.
Fig. 16 is a flowchart illustrating how each ECU shown in Fig. 1 switches the state of the second communication unit or the relay unit in accordance with the activation flag.
Fig. 17 is a schematic diagram illustrating how the first device shown in Fig. 1 sends the first message to another ECU.
Fig. 18 is a schematic diagram illustrating how the first device shown in Fig. 1 sends the activation request signal to another ECU.
Fig. 19 is a table illustrating an example of the activation request signal sent by the first device of Fig. 1 to perform the second communication with another ECU.
Fig. 20 is a table illustrating an example of the activation request signal sent by the first device of Fig. 1 when it no longer needs to perform the second communication with another ECU.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

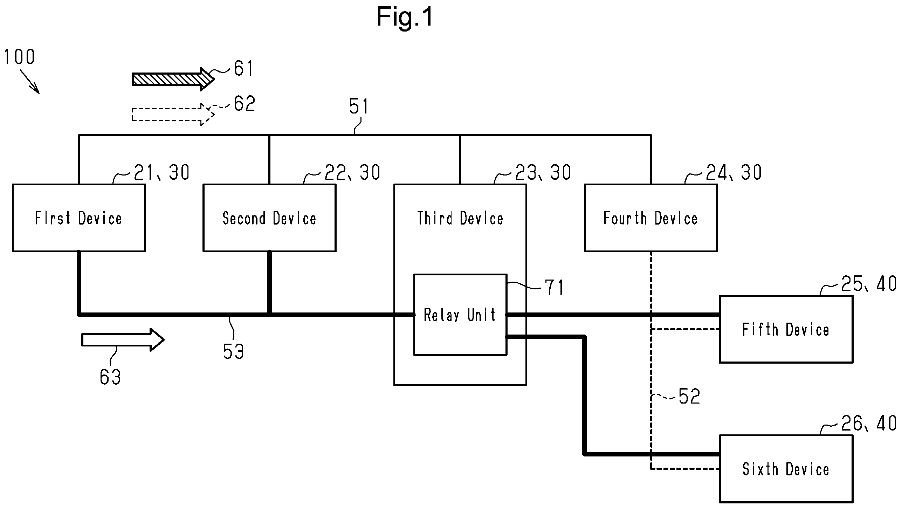

An embodiment of an in-vehicle network system will now be described with reference to Figs. 1 to 20.

### Configuration of In-Vehicle Network System 100

As shown in Fig. 1, an in-vehicle network system 100 includes electronic control units (ECUs).

In the in-vehicle network system 100, the ECUs include a first device 21, a second device 22, a third device 23, a fourth device 24, a fifth device 25, and a sixth device 26. The ECUs are connected to each other for mutual communication.

The in-vehicle network system 100 includes communication buses. The communication buses include a first communication bus 51, a second communication bus 52, and a third communication bus 53.

The first communication bus 51 and the second communication bus 52 relay first communication between the ECUs. The first communication is based on a first communication standard. The first communication standard is, for example, controller area network (CAN).

The first device 21, the second device 22, the third device 23, and the fourth device 24 are connected to each other via the first communication bus 51. Each ECU connected to the first communication bus 51 is configured to perform the first communication with another ECU via the first communication bus 51. For example, the first device 21 is configured to send and receive a message by performing the first communication with another ECU via the first communication bus 51.

The fourth device 24, the fifth device 25, and the sixth device 26 are connected to each other via the second communication bus 52. Each ECU connected to the second communication bus 52 is configured to perform the first communication with another ECU via the second communication bus 52. For example, the fifth device 25 is configured to send and receive a message by performing the first communication with another ECU via the second communication bus 52.

The fourth device 24 is connected to the first communication bus 51 and the second communication bus 52.

Upon receiving a message via the first communication bus 51, the fourth device 24 sends the received message to an ECU connected to the second communication bus 52. For example, in order to send a message to the fifth device 25 through the first communication, the first device 21 sends the message to the fourth device 24 via the first communication bus 51. Then, the fourth device 24 sends the message received from the first device 21 to the fifth device 25 via the second communication bus 52.

Upon receiving a message via the second communication bus 52, the fourth device 24 sends the received message to an ECU connected to the first communication bus 51. For example, in order to send a message to the first device 21 through the first communication, the fifth device 25 sends the message to the fourth device 24 via the second communication bus 52. Then, the fourth device 24 sends the message received from the fifth device 25 to the first device 21 via the first communication bus 51.

In this manner, the fourth device 24 relays a message exchanged between the first communication bus 51 and the second communication bus 52. The fourth device 24 checks the received message. The fourth device 24 then relays the message only when determining that it needs to send the received message via another communication bus.

The third communication bus 53 relays second communication between the ECUs. The second communication is based on a second communication standard. The second communication standard is different from the first communication standard. The second communication standard is, for example, Ethernet^{®}.

The first device 21, the second device 22, the third device 23, the fifth device 25, and the sixth device 26 are connected to each other via the third communication bus 53. Each ECU connected to the third communication bus 53 is configured to perform the second communication with another ECU via the third communication bus 53. For example, the first device 21 is configured to send and receive a message by performing the second communication with another ECU via the third communication bus 53.

The third device 23 includes a relay unit 71. The relay unit 71 is an Ethernet^{®} switch.

In the third communication bus 53, the first device 21 and the second device 22 are connected to the fifth device 25 via the relay unit 71. In the third communication bus 53, the first device 21 and the second device 22 are connected to the sixth device 26 via the relay unit 71. In the third communication bus 53, the fifth device 25 is connected to the sixth device 26 via the relay unit 71.

The third device 23 serves as a relay device. The relay device relays the second communication executed between the ECUs through the relay unit 71. For example, in order to send a message to the fifth device 25 through the second communication, the first device 21 sends the message to the third device 23 through the third communication bus 53. The third device 23 receives the message from the first device 21 via the relay unit 71. The third device 23 sends the received message from the relay unit 71 to the fifth device 25 through the third communication bus 53. The third device 23, having confirmed that the received message is addressed to the fifth device 25, refrains from sending it to the sixth device 26. That is, the third device 23 checks the destination of the received message and then sends the message to the destination of the message.

In the third communication bus 53, the first device 21 and the second device 22 are directly connected to each other without the relay unit 71. This allows the first device 21 and the second device 22 to perform the second communication without being relayed by the third device 23.

### Configuration of ECUs

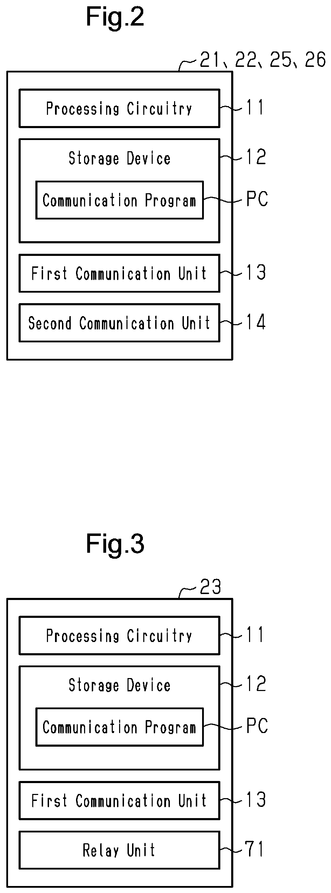

Fig. 2 illustrates the configuration of each of the first device 21, the second device 22, the fifth device 25, and the sixth device 26. Each of the first device 21, the second device 22, the fifth device 25, and the sixth device 26 includes processing circuitry 11 and a storage device 12.

The processing circuitry 11 executes programs stored in the storage device 12 to execute various processes. The processing circuitry 11 includes a processor.

The storage device 12 stores a communication program PC. The communication program PC, when executed by the processing circuitry 11, causes it to communicate with another ECU.

Each ECU includes a communication device that communicates with another ECU. The communication device is configured to be switched between a standby state, in which the function of communicating with another ECU is restricted, and an active state, in which the restriction is lifted. Each ECU is enabled to send a message to another ECU when the communication device is in the active state. Each of the first device 21, the second device 22, the fifth device 25, and the sixth device 26 includes a first communication unit 13 and a second communication unit 14 as communication devices.

The first communication unit 13 is configured to execute the first communication. Each of the first device 21, the second device 22, the fifth device 25, and the sixth device 26 is enabled to execute the first communication with another ECU when the first communication unit 13 is in the active state.

The second communication unit 14 is configured to execute the second communication. Each of the first device 21, the second device 22, the fifth device 25, and the sixth device 26 is enabled to execute the second communication with another ECU when the second communication unit 14 is in the active state.

The configuration of the fourth device 24 is the same as the configuration of each ECU shown in Fig. 2, except that the fourth device 24 does not include the second communication unit 14.

Fig. 3 illustrates the configuration of the third device 23. In the same manner as each ECU shown in Fig. 2, the third device 23 includes the processing circuitry 11 and the storage device 12. In the same manner as each ECU shown in Fig. 2, the third device 23 stores the communication program PC in the storage device 12.

As shown in Fig. 3, the third device 23 includes the first communication unit 13 and the relay unit 71 as communication devices.

As described above, the third device 23 relays the second communication using the relay unit 71. The third device 23 is configured to execute the second communication with another ECU using the relay unit 71. The relay unit 71 functions to relay the second communication between the ECUs and functions as the second communication unit 14. In other words, the third device 23 includes the second communication unit 14, which functions as the relay unit 71.

The third device 23 is enabled to execute the first communication with another ECU when the first communication unit 13 is in the active state. The third device 23 is enabled to execute the second communication with another ECU when the relay unit 71 is in the active state. The third device 23 is enabled to relay the second communication between the ECUs when the relay unit 71 is in the active state.

### Types of Messages

The ECU configured to perform the first communication has a network management (hereinafter referred to as NM) function. The ECU having the NM function may be hereinafter referred to as a management ECU. Upon receiving the first activation notification through the first communication while the first communication unit 13 is in the standby state, a management ECU shifts the first communication unit 13 to the active state. The first activation notification is a message requesting activation of the first communication unit 13. A management ECU maintains the first communication unit 13 in the active state as long as it periodically receives the first activation notification.

Before a management ECU starts the first communication with another management ECU, the management ECU activates their first communication units 13. Activating a communication device refers to shifting a communication device from the standby state to the active state when it is in the standby state, or maintaining the active state when it is in the active state.

A management ECU activates its first communication unit 13 before starting the first communication with another management ECU. The management ECU that has activated its first communication unit 13 sends the first activation notification to a management ECU to be communicated with in the first communication, thereby activating the first communication unit 13 of the management ECU to be communicated with. The management ECU starts the first communication after activating its first communication unit 13 and the first communication unit 13 of the management ECU to be communicated with.

As shown in Fig. 1, messages exchanged by the ECUs through the first communication include a first message 61 and a second message 62.

The first message 61 is a message that requests activation of the first communication unit 13, that is, the first activation notification. Each ECU activates the first communication unit 13 by receiving the first message 61.

The second message 62 is a message sent through the first communication other than the first message 61. For example, each ECU sends information indicating the traveling speed of a vehicle as the second message 62. Each ECU is enabled to exchange the second message 62 when the first communication unit 13 is in the active state.

As shown in Fig. 1, each ECU sends a third message 63 through the second communication. Each ECU is enabled to exchange the third message 63 when the second communication unit 14 is in the active state.

### Classification of Management ECUs

The management ECUs include an ECU having a partial network (hereinafter referred to as PN) function and an ECU having no PN function.

The first device 21, the second device 22, the third device 23, and the fourth device 24 are PN devices 30. The PN device 30 refers to a management ECU that has the PN function.

The PN device 30 sends a PN message as the first activation notification. The PN message includes an identifier that is information used to identify the destination ECU of a PN message. The PN device 30 sends the PN message addressed to an ECU for which the first communication unit 13 is to be activated. The PN device 30 periodically sends a PN message while performing the first communication.

The fifth device 25 and the sixth device 26 are NM devices 40. The NM device 40 refers to a management ECU that has no PN function.

The NM device 40 sends an NM message as the first activation notification. A NM message does not include an identifier indicating the destination ECU of the NM message. The NM device 40 periodically sends an NM message while executing the first communication.

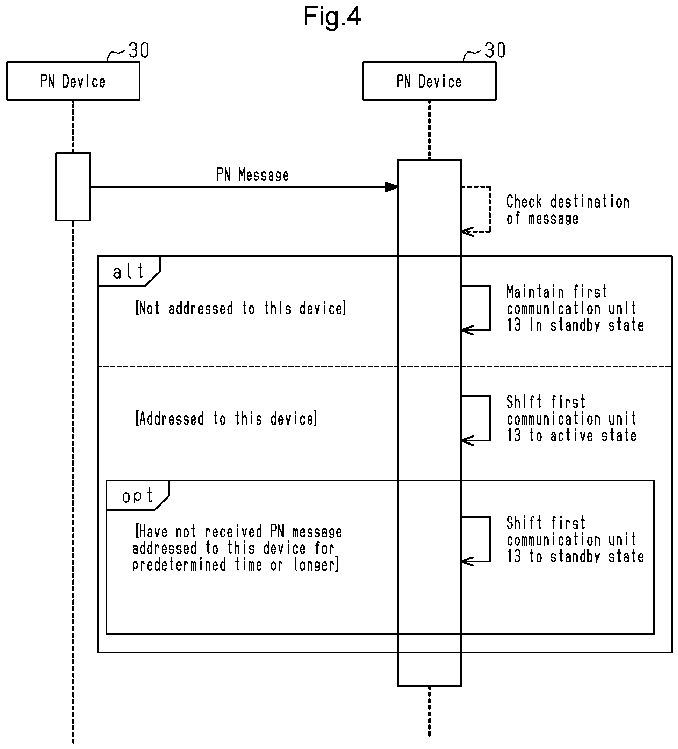

The differences between the PN device 30 and the NM device 40 will now be described with reference to Figs. 4 to 7.

### Features of PN Device 30

Fig. 4 illustrates a process executed when a PN device 30 receives a PN message from another PN device 30. In Fig. 4, the first communication unit 13 of the PN device 30 that is to receive a PN message receives the PN message in the standby state.

As illustrated in the upper part of Fig. 4, the PN device 30 that has received the PN message from another PN device 30 checks the destination of the received PN message. The PN device 30 checks the identifier included in the PN message.

As illustrated in the middle part of Fig. 4, the PN device 30 that has received the PN message maintains the standby state of the first communication unit 13 when the received PN message is not addressed to the PN device 30.

As illustrated in the lower part of Fig. 4, the PN device 30 that has received the PN message shifts the first communication unit 13 from the standby state to the active state when the received PN message is addressed to the PN device 30.

In this manner, upon receiving a PN message, the PN device 30 shifts the first communication unit 13 from the standby state to the active state when the PN message is addressed to the PN device 30. The PN device 30 that has received the PN message shifts the first communication unit 13 to the active state and then maintains the active state of the first communication unit 13 for a predetermined time.

As illustrated in the lower part of Fig. 4, when the PN device 30 has not received a PN message addressed to the PN device 30 for the predetermined time or longer after receiving a PN message addressed thereto, the PN device 30 shifts the first communication unit 13 from the active state to the standby state.

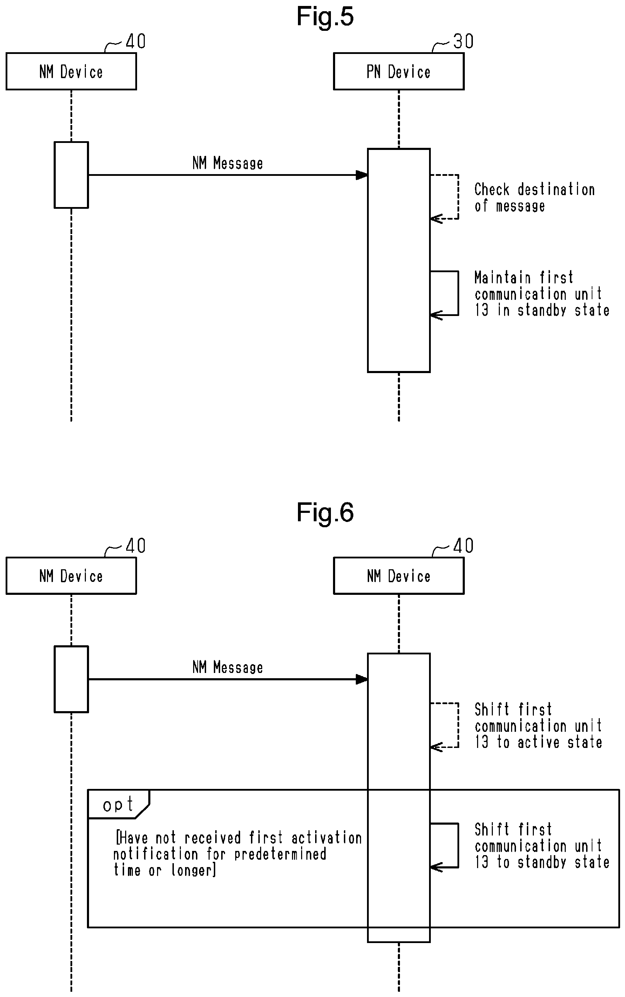

Fig. 5 illustrates a process executed when a PN device 30 receives an NM message from an NM device 40. In Fig. 5, the first communication unit 13 of the PN device 30 receives the NM message in the standby state.

As illustrated in the upper part of Fig. 5, after receiving the NM message from the NM device 40, the PN device 30 checks the destination of the received NM message.

As described above, an NM message does not include an identifier indicating the destination of the NM message. When the received first activation notification is an NM message, the PN device 30 determines that the first activation notification is not addressed to the PN device 30.

As illustrated in the lower part of Fig. 5, the PN device 30 that has received the NM message maintains the standby state of the first communication unit 13 in the same manner as when receiving a PN message that is not addressed to the PN device 30.

In this manner, upon receiving the first activation notification, the PN device 30 activates the first communication unit 13 when the received first activation notification is a PN message addressed to the PN device 30. When the received first activation notification is a PN message that is not addressed to the PN device 30, the PN device 30 does not activate the first communication unit 13. Further, when the received first activation notification is an NM message, the PN device 30 does not activate the first communication unit 13.

### Features of NM Device 40

Fig. 6 illustrates a process executed when an NM device 40 receives an NM message from another NM device 40. In Fig. 6, the first communication unit 13 of the NM device 40 that is to receive an NM message receives the NM message in the standby state.

As illustrated in the upper part of Fig. 6, the NM device 40 that has received an NM message from another NM device 40 shifts the first communication unit 13 from the standby state to the active state without checking the destination of the received NM message.

After shifting the first communication unit 13 to the active state, the NM device 40 maintains the active state of the first communication unit 13 for a predetermined time.

As illustrated in the lower part of Fig. 6, when the NM device 40 has not received an NM message for the predetermined time or longer after receiving an NM message, the NM device 40 shifts the first communication unit 13 from the active state to the standby state.

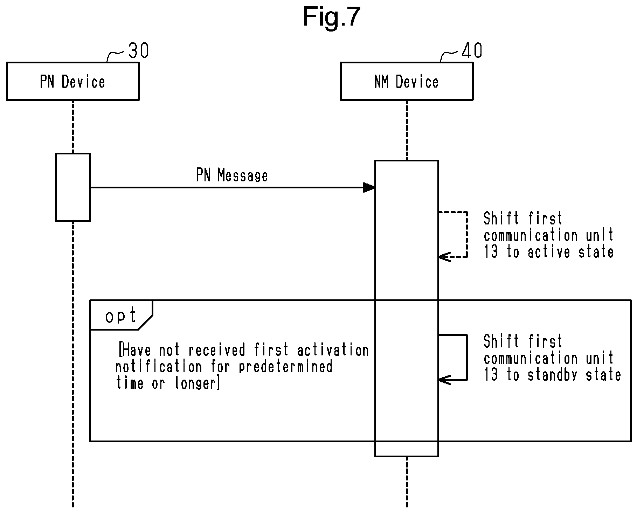

Fig. 7 illustrates how an NM device 40 executes a process when receiving a PN message from a PN device 30. In Fig. 7, the first communication unit 13 of the NM device 40 receives a PN message in the standby state.

As illustrated in the upper part of Fig. 7, after receiving a PN message from the PN device 30, the NM device 40 shifts the first communication unit 13 from the standby state to the active state without checking the destination of the received PN message.

After shifting the first communication unit 13 to the active state, the NM device 40 maintains the active state of the first communication unit 13 for a predetermined time.

As illustrated in the lower part of Fig. 7, when the NM device 40 has not received a PN message for the predetermined time or longer after receiving a PN message, the NM device 40 shifts the first communication unit 13 from the active state to the standby state.

In this manner, when receiving the first activation notification, the NM device 40 does not check the identifier included in the first activation notification. When receiving the first activation notification, the NM device 40 activates the first communication unit 13 regardless of whether the received first activation notification is addressed to the NM device 40. Also, when receiving the first activation notification, the NM device 40 activates the first communication unit 13 regardless of whether the received first activation notification is a PN message or an NM message.

How a Conventional ECU Activates the Second communication unit 14 or the Relay Unit 71

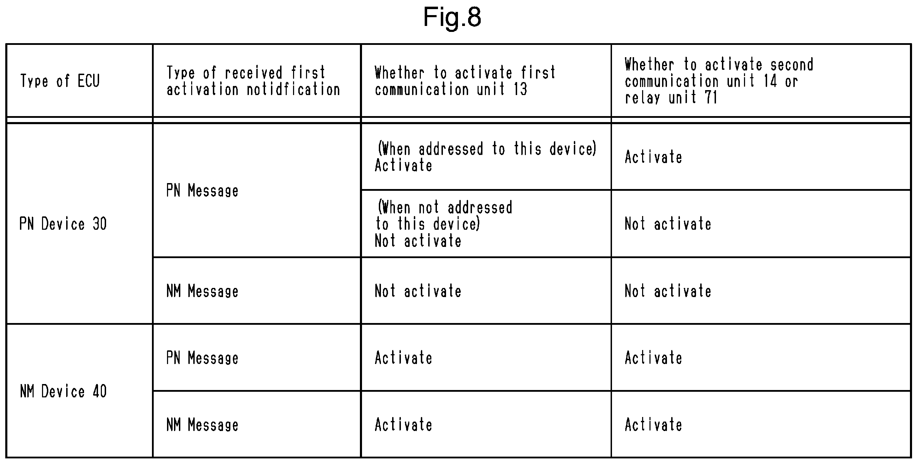

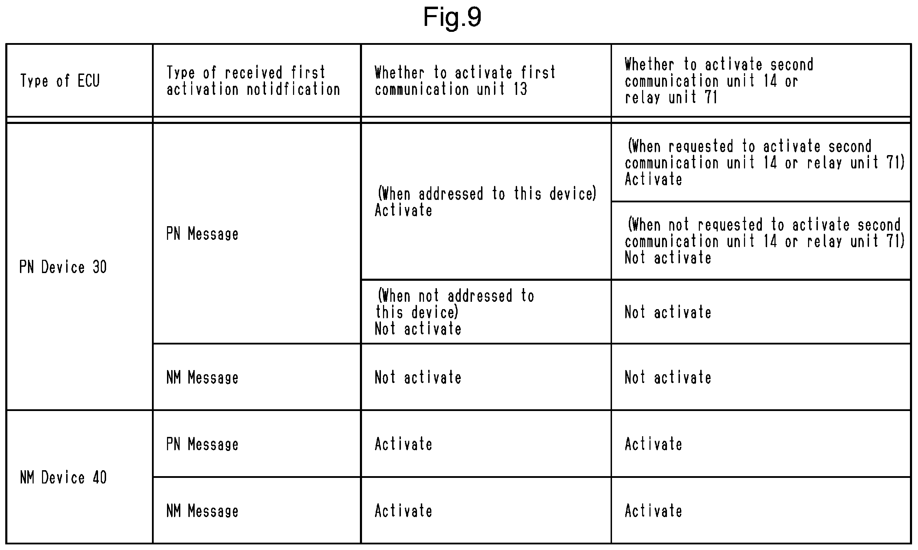

With reference to Figs. 8 and 9, how an ECU activates the second communication unit 14 or the relay unit 71 in a conventional in-vehicle network system 100 will now be described.

Fig. 8 is a table summarizing the type of ECU that has received the first activation notification, the type of the received first activation notification, and how to activate the communication device in response to the first activation notification in the conventional in-vehicle network system 100.

As shown in Fig. 8, the PN device 30 activates the first communication unit 13 upon receiving a PN message addressed to the PN device 30. Upon receiving a PN message addressed to the PN device 30, the PN device 30 activates the second communication unit 14 or the relay unit 71 together with the first communication unit 13.

In a case in which the in-vehicle network system 100 of Fig. 1 employs the configuration illustrated in Fig. 8, the first device 21 and the second device 22 each activate the second communication unit 14 upon receiving a PN message addressed to the corresponding device. Specifically, the first device 21 and the second device 22 each shift the second communication unit 14 to the active state upon receiving a PN message addressed to the corresponding device while the second communication unit 14 is in the standby state. After shifting the second communication unit 14 to the active state, the first device 21 and the second device 22 each maintain the active state of the second communication unit 14 for a predetermined time. When each of the first device 21 and the second device 22 has not received a PN message addressed to the corresponding device for the predetermined time or longer after receiving a PN message addressed to the corresponding device, the first device 21 and the second device 22 each shift the second communication unit 14 from the active state to the standby state.

In a case in which the in-vehicle network system 100 of Fig. 1 employs the configuration illustrated in Fig. 8, the third device 23 activates the relay unit 71 upon receiving a PN message addressed to the third device 23. Specifically, upon receiving a PN message addressed to the third device 23 while the relay unit 71 is in the standby state, the third device 23 shifts the relay unit 71 to the active state. After shifting the relay unit 71 to the active state, the third device 23 maintains the active state of the relay unit 71 for a predetermined time. When the third device 23 has not received a PN message addressed to the third device 23 for the predetermined time or longer after receiving a PN message addressed to the third device 23, the third device 23 shifts the relay unit 71 from the active state to the standby state.

As illustrated in Fig. 8, when receiving a PN message or an NM message that is not addressed to the PN device 30, the PN device 30 does not activate the first communication unit 13. As illustrated in Fig. 8, when receiving a PN message or an NM message that is not addressed to the PN device 30, the PN device 30 does not activate the second communication unit 14 or the relay unit 71.

In a case in which the in-vehicle network system 100 of Fig. 1 employs the configuration illustrated in Fig. 8, each of the first device 21 and the second device 22 does not activate the second communication unit 14 when receiving a PN message that is not addressed to the corresponding device. Also, in a case in which the in-vehicle network system 100 of Fig. 1 employs the configuration illustrated in Fig. 8, each of the first device 21 and the second device 22 does not activate the second communication unit 14 when receiving an NM message.

In a case in which the in-vehicle network system 100 of Fig. 1 employs the configuration illustrated in Fig. 8, the third device 23 does not activate the relay unit 71 when receiving a PN message that is not addressed to the third device 23. Also, in a case in which the in-vehicle network system 100 of Fig. 1 employs the configuration illustrated in Fig. 8, the third device 23 does not activate the relay unit 71 when receiving an NM message.

As illustrated in Fig. 8, when receiving a PN message or an NM message that is not addressed to the NM device 40, the NM device 40 activates the first communication unit 13. As illustrated in Fig. 8, when receiving a PN message or an NM message that is not addressed to the NM device 40, the NM device 40 activates the second communication unit 14 or the relay unit 71.

In a case in which the in-vehicle network system 100 of Fig. 1 employs the configuration illustrated in Fig. 8, each of the fifth device 25 and the sixth device 26 activates the second communication unit 14 when receiving a PN message or an NM message. Specifically, the fifth device 25 and the sixth device 26 each shift the second communication unit 14 to the active state when receiving a PN message or an NM message while the second communication unit 14 is in the standby state. After shifting the second communication unit 14 to the active state, the fifth device 25 and the sixth device 26 each maintain the active state of the second communication unit 14 for a predetermined time. When each of the fifth device 25 and the sixth device 26 has not received a PN message or an NM message for the predetermined time or longer after receiving a PN message or an NM message, the fifth device 25 and the sixth device 26 each shift the second communication unit 14 from the active state to the standby state.

The in-vehicle network system 100 of Fig. 1 does not include the NM device 40 that includes the relay unit 71. However, there may be a case in which the NM device 40 includes the relay unit 71. In this case, the NM device 40 activates the relay unit 71 upon receiving an NM message or a PN message.

In the example of Fig. 8, the PN device 30 sends a PN message including an identifier that indicates the destination ECU of the PN message. When receiving the PN message, the PN device 30 determines only whether the PN message is addressed to the PN device 30 based on the identifier.

There may also be a case in which the PN device 30 sends a PN message, with an identifier including information indicating whether to request activation of the second communication unit 14 or the relay unit 71, in addition to the information indicating the destination ECU of the PN message.

Fig. 9 is a table with such a configuration employed for ECUs, summarizing the type of ECU that has received the first activation notification, the type of the received first activation notification, and how to activate the communication device in response to the first activation notification.

As shown in Fig. 9, when receiving a PN message addressed to the PN device 30, the PN device 30 activates the first communication unit 13. When receiving a PN message addressed to the PN device 30, the PN device 30 refers to the identifier to determine whether activation of the second communication unit 14 or the relay unit 71 is requested.

When receiving a PN message addressed to the PN device 30 and then referring to the identifier to determine that activation of the second communication unit 14 or the relay unit 71 is requested, the PN device 30 activates the second communication unit 14 or the relay unit 71. In a case in which the in-vehicle network system 100 of Fig. 1 employs the configuration illustrated in Fig. 9, when the first device 21 and the second device 22 each refer to the identifier to determine that activation of the second communication unit 14 is requested, it activates the second communication unit 14. In a case in which the in-vehicle network system 100 of Fig. 1 employs the configuration illustrated in Fig. 9, when the third device 23 refers to the identifier to determine that activation of the relay unit 71 is requested, it activates the relay unit 71.

The PN device 30 of Fig. 9 that has received a PN message or an NM message that is not addressed to the PN device 30 operates in the same manner as the PN device 30 of Fig. 8. The NM device 40 of Fig. 9 that has received a PN message or an NM message operates in the same manner as the NM device 40 of Fig. 8.

### Problems in Conventional ECUs

In a case in which each ECU employs the configuration illustrated in Fig. 8, the ECU activates the second communication unit 14 or the relay unit 71 upon activating the first communication unit 13. In this case, even if the ECU does not need to perform the second communication with another ECU, the ECU activates the second communication unit 14 or the relay unit 71 while the first communication unit 13 is in the active state.

In a case in which each ECU employs the configuration illustrated in Fig. 9, a PN device 30 is configured to determine the necessity of activating the second communication unit 14 or the relay unit 71 based on an identifier. The PN device 30 is configured to prevent the second communication unit 14 or the relay unit 71 from being activated unless activation is required, while activating the first communication unit 13.

However, when the ECU employs the configuration illustrated in Fig. 9, the NM device 40 also activates the second communication unit 14 upon activating the first communication unit 13. Thus, even if the NM device 40 does not need to perform the second communication with another ECU, the NM device 40 activates the second communication unit 14 while the first communication unit 13 is in the active state.

The ECUs employing the conventional configuration activate the second communication unit 14 or the relay unit 71 even when activation is unnecessary. In particular, the NM device 40 is unable to confirm an identifier. Thus, even if the configuration of Fig. 8 or 9 is employed, the NM device 40 activates the second communication unit 14 when activation is unnecessary.

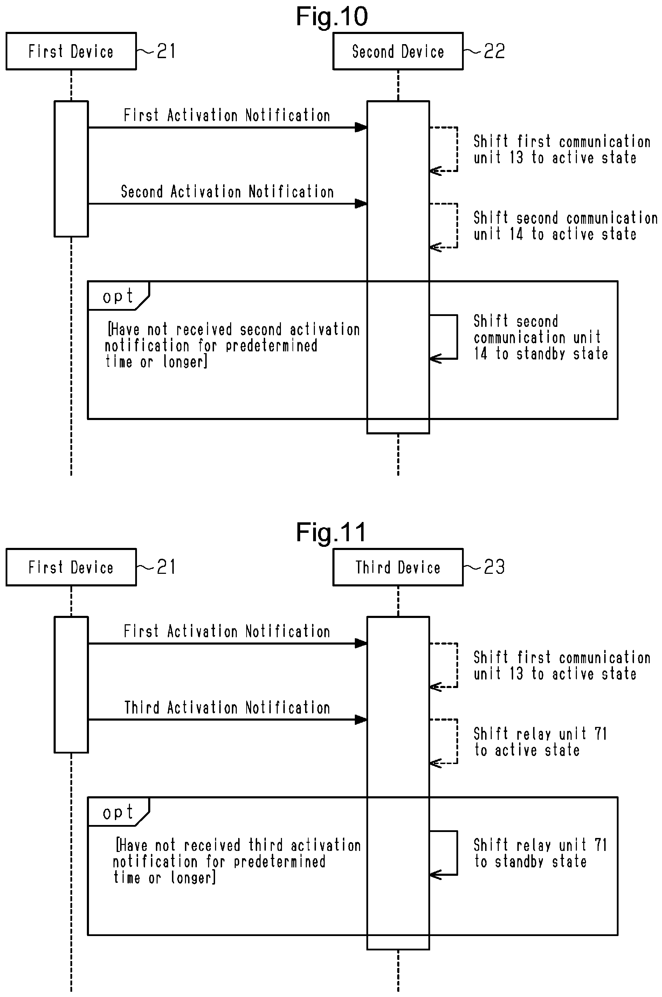

To solve such a problem, the ECUs according to the present embodiment control activation of the second communication unit 14 and the relay unit 71 using the second message 62. With reference to Figs. 10 and 11, how the ECUs of the present embodiment control activation of the second communication unit 14 and the relay unit 71 using the second message 62 will now be described.

### Activation of Second Communication Unit 14

Fig. 10 illustrates how the first device 21 controls activation of the second communication unit 14 of the second device 22 to perform the second communication with the second device 22. In Fig. 10, before receiving a message from the first device 21, the second device 22 keeps the first communication unit 13 and the second communication unit 14 in the standby state.

As illustrated in the upper part of Fig. 10, the first device 21 sends the first activation notification to the second device 22 through the first communication. The first device 21 sends a PN message addressed to the second device 22 as the first activation notification.

As illustrated in the upper part of Fig. 10, after receiving the first activation notification, the second device 22 shifts the first communication unit 13 from the standby state to the active state. That is, the second device 22 confirms that the received first activation notification is a PN message addressed to the second device 22, and then shifts the first communication unit 13 to the active state.

Thereafter, the first device 21 periodically sends the first activation notification while performing the second communication with the second device 22. Subsequent to shifting the first communication unit 13 to the active state, the second device 22 maintains the first communication unit 13 in the active state while periodically receiving the first activation notification.

As illustrated in the middle part of Fig. 10, the first device 21 activates the first communication unit 13 of the second device 22 and then sends the second activation notification. The second activation notification is a message requesting activation of the second communication unit 14 to be communicated in the second communication. The second activation notification is the second message 62. That is, the second activation notification is sent through the first communication.

As illustrated in the middle part of Fig. 10, after receiving the second activation notification, the second device 22 shifts the second communication unit 14 from the standby state to the active state.

Thereafter, the first device 21 continues to periodically send the second activation notification through the first communication while performing the second communication. After shifting the second communication unit 14 to the active state, the second device 22 maintains the second communication unit 14 in the active state while periodically receiving the second activation notification.

In this manner, an ECU first activates the first communication unit 13 of another ECU using the first activation notification in order to perform the second communication with the other ECU. Subsequently, the ECU activates the second communication unit 14 of the other ECU by sending the second activation notification through the first communication. This allows the ECU to perform the second communication with the other ECU.

When the second communication is no longer required, the first device 21 ceases to send the second activation notification. As illustrated in the lower part of Fig. 10, when the second device 22 has not received the second activation notification for a predetermined time or longer after receiving the second activation notification, the second device 22 shifts the second communication unit 14 from the active state to the standby state.

In this manner, the ECU periodically sends the second activation notification while the second communication is required. The ECU stops periodically sending the second activation notification when ceasing the second communication.

### Activation of Relay Unit 71

Fig. 11 illustrates how the first device 21 controls activation of the relay unit 71 of the third device 23.

An ECU requests activation of the relay unit 71 of the third device 23 when performing the second communication with the third device 23. The ECU requests activation of the relay unit 71 when performing the second communication with another ECU, provided that the relay by the relay unit 71 is required. For example, when performing the second communication with the fifth device 25, the first device 21 requests activation of the second communication unit 14 of the fifth device 25 and requests activation of the relay unit 71 of the third device 23.

In Fig. 11, before receiving a message from the first device 21, the third device 23 keeps the first communication unit 13 and the relay unit 71 in the standby state.

As illustrated in the upper part of Fig. 11, the first device 21 sends the first activation notification to the third device 23 through the first communication. The first device 21 sends a PN message addressed to the third device 23 as the first activation notification.

As illustrated in the upper part of Fig. 11, after receiving the first activation notification, the third device 23 shifts the first communication unit 13 from the standby state to the active state. The third device 23 confirms that the received first activation notification is a PN message addressed to the third device 23, and then shifts the first communication unit 13 to the active state.

Thereafter, the first device 21 periodically sends the first activation notification while requesting activation of the relay unit 71. Subsequent to shifting the first communication unit 13 to the active state, the third device 23 maintains the first communication unit 13 in the active state while periodically receiving the first activation notification.

As illustrated in the middle part of Fig. 11, the first device 21 activates the first communication unit 13 of the third device 23 and then sends the third activation notification. The third activation notification is a message requesting activation of the relay unit 71. The third activation notification is the second message 62. The third activation notification is sent through the first communication.

As illustrated in the middle part of Fig. 11, after receiving the third activation notification, the third device 23 shifts the relay unit 71 from the standby state to the active state.

Thereafter, the first device 21 continues to periodically send the third activation notification through the first communication while requesting activation of the relay unit 71. Subsequent to shifting the relay unit 71 to the active state, the third device 23 maintains the relay unit 71 in the active state while periodically receiving the third activation notification.

In this manner, to request activation of the relay unit 71, each ECU first activates the first communication unit 13 of the third device 23 using the first activation notification. Next, the ECU activates the relay unit 71 of the third device 23 by sending the third activation notification through the first communication. This allows the ECU to perform the second communication with the third device 23. This also allows the ECU to have the third device 23 relay the second communication in order to perform the second communication with another ECU.

When the relay unit 71 no longer needs to be activated, the first device 21 ceases to send the third activation notification. As illustrated in the lower part of Fig. 11, when the third device 23 has not received the third activation notification for a predetermined time or longer after receiving the third activation notification, the third device 23 shifts the relay unit 71 from the active state to the standby state.

In this manner, each ECU periodically sends the third activation notification while the relay unit 71 needs to be activated. When the relay unit 71 no longer needs to be activated, the ECU ceases to send the third activation notification.

In Fig. 10, the first device 21 and the second device 22 are PN devices 30. Fig. 10 illustrates how a PN device 30 sends the first and second activation notifications to perform the second communication with another PN device 30.

When a PN device 30 sends the first and second activation notifications, the second communication between the PN device 30 and an NM device 40 is also executable. When an NM device 40 sends the first and second activation notifications, the second communication between NM devices 40 is also executable.

As illustrated in Fig. 5, the NM device 40 is unable to activate the first communication unit 13 of the PN device 30. Thus, the NM device 40 is unable to activate the second communication unit 14 of the PN device 30 by sending the first and second activation notifications.

In Fig. 11, the first device 21 and the third device 23 are PN devices 30. Fig. 11 illustrates how a PN device 30 sends the first activation notification and the third activation notification to activate the relay unit 71 of another PN device 30.

As described above, an NM device 40 may include a relay unit 71. In this case, the PN device 30 is configured to activate the relay unit 71 of the NM device 40 by sending the first and third activation notifications. Further, the NM device 40 is configured to activate the relay unit 71 of another NM device 40 by sending the first and third activation notifications.

As illustrated in Fig. 5, the NM device 40 is unable to activate the first communication unit 13 of the PN device 30. Thus, the NM device 40 is unable to activate the relay unit 71 of the PN device 30 by sending the first activation notification and the third activation notification.

### Activation Request Signal 64

As described with reference to Fig. 10, each ECU sends the second activation notification to activate the second communication unit 14 of another ECU. As described with reference to Fig. 11, each ECU sends the third activation notification to activate the relay unit 71 of the third device 23.

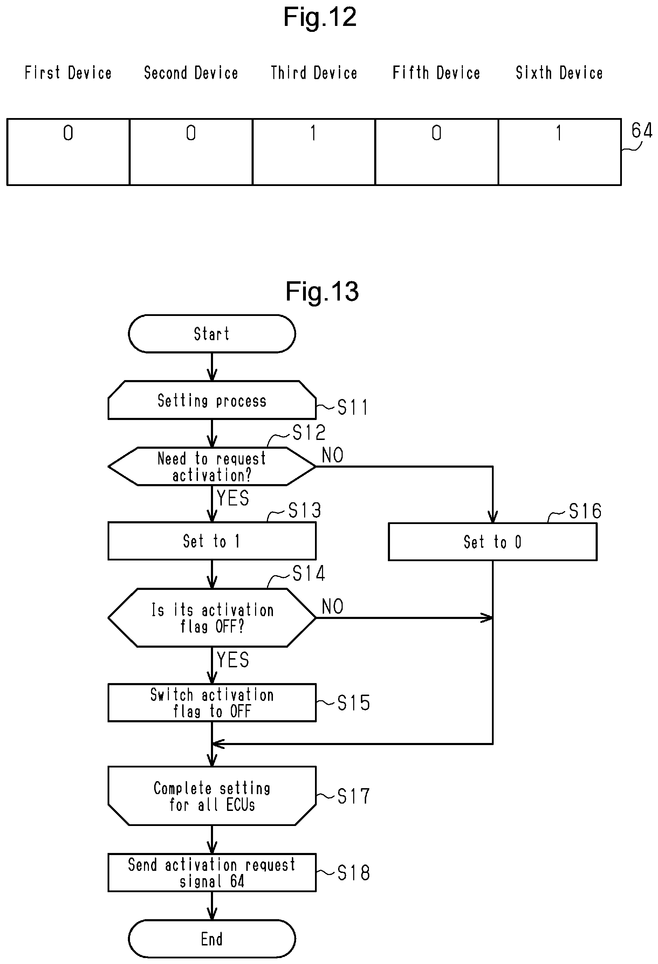

Fig. 12 shows an example of the activation request signal 64. The activation request signal 64 is a message serving as the second and third activation notifications. The activation request signal 64 is the second message 62. Each ECU sends and receives the activation request signal 64 through the first communication.

Each ECU in the in-vehicle network system 100 periodically sends the activation request signal 64. Since the fourth device 24 does not include the second communication unit 14 or the relay unit 71, the fourth device 24 neither performs the second communication nor relays the second communication. Thus, the fourth device 24 does not send the activation request signal 64.

As shown in Fig. 12, the activation request signal 64 includes a slot corresponding to each ECU. The fourth device 24 does not need to receive the activation request signal 64. Accordingly, the activation request signal 64 does not have a slot corresponding to the fourth device 24.

Each slot corresponding to an ECU having the second communication unit 14 is set to 0 or 1. The slots respectively corresponding to the first device 21, the second device 22, the fifth device 25, and the sixth device 26 are set to 0 or 1.

When an ECU needs to request activation of the second communication unit 14 of another ECU at the time of sending the activation request signal 64, the ECU sets the slot corresponding to the other ECU to 1. For example, when the first device 21 needs to activate the second communication unit 14 of the sixth device 26, as illustrated in Fig. 12, the first device 21 sets the slot corresponding to the sixth device 26 to 1 and sends the activation request signal 64.

When receiving the activation request signal 64, the ECU including the second communication unit 14 activates the second communication unit 14 in a case in which the slot corresponding to the ECU has been set to 1. In this manner, an ECU sends, as the second activation notification to another ECU, the activation request signal 64 in which the slot corresponding to the other ECU is set to 1, in order to activate the second communication unit 14 of the other ECU.

When an ECU does not need to request activation of the second communication unit 14 of another ECU at the time of sending the activation request signal 64, the ECU sets the slot corresponding to the other ECU to 0. For example, when the first device 21 does not need to activate the second communication unit 14 of the second device 22, as illustrated in Fig. 12, the first device 21 sets the slot corresponding to the second device 22 to 0 and sends the activation request signal 64.

When receiving the activation request signal 64, the ECU including the second communication unit 14 does not activate the second communication unit 14 in a case in which the slot corresponding to the ECU is set to 0.

In this manner, when an ECU sets the slot corresponding to another ECU including the second communication unit 14 to 1 and sends the activation request signal 64, only the other ECU activates the second communication unit 14. In other words, an ECU, prior to performing the second communication with another ECU, sends the activation request signal 64 that specifies the ECU to be communicated with in the second communication. The ECU that has received the activation request signal 64 does not activate the second communication unit 14 in a case in which the received activation request signal 64 does not specify the ECU.

As described above, an ECU periodically sends the activation request signal 64 in which the slot corresponding to another ECU is set to 1, while requesting activation of the second communication unit 14 of the other ECU. The ECU sends the activation request signal 64 in which the slot corresponding to the other ECU is set to 0, when there is no longer a need to request activation of the second communication unit 14 of the other ECU.

In other words, an ECU periodically sends the second activation notification to another ECU having the second communication unit 14, while periodically sending the activation request signal 64 in which the slot corresponding to the other ECU is set to 1. Further, when the ECU starts to periodically send the activation request signal 64 in which the slot corresponding to the other ECU having the second communication unit 14 is set to 0, the ECU stops sending the second activation notification to the other ECU.

The slot corresponding to an ECU that includes the relay unit 71 is also set to 0 or 1. That is, the slot corresponding to the third device 23 is set to 0 or 1.

When an ECU needs to request activation of the relay unit 71 of the third device 23 at the time of sending the activation request signal 64, the ECU sets the slot corresponding to the third device 23 to 1. For example, when the first device 21 needs to activate the relay unit 71 of the third device 23, as illustrated in Fig. 12, the first device 21 sets the slot corresponding to the third device 23 to 1 and sends the activation request signal 64.

When receiving the activation request signal 64, the third device 23 activates the relay unit 71 in a case in which the slot corresponding to the third device 23 is set to 1. In this manner, an ECU sends, as the third activation notification, the activation request signal 64 in which the slot corresponding to the third device 23 is set to 1.

When an ECU does not need to request activation of the relay unit 71 of the third device 23 at the time of sending the activation request signal 64, the ECU sets the slot corresponding to the third device 23 to 0.

When receiving the activation request signal 64, the third device 23 does not activate the relay unit 71 in a case in which the slot corresponding to the third device 23 is set to 0.

As described above, an ECU periodically sends the activation request signal 64 in which the slot corresponding to the third device 23 is set to 1, while requesting activation of the relay unit 71 of the third device 23. When the ECU does not need to request activation of the relay unit 71 of the third device 23, the ECU sends the activation request signal 64 in which the slot corresponding to the third device 23 is set to 0.

In other words, an ECU periodically sends the third activation notification to the third device 23, while periodically sending the activation request signal 64 in which the slot corresponding to the third device 23 is set to 1. Further, when the ECU starts to periodically send the activation request signal 64 in which the slot corresponding to the third device 23 is set to 0, the ECU stops sending the third activation notification to the third device 23.

### Processes Executed to Send Activation Request Signal 64

Fig. 13 illustrates a series of processes executed when an ECU sends the activation request signal 64. The series of processes illustrated in Fig. 13 is executed by the processing circuitry 11 of each of the first device 21, the second device 22, the third device 23, the fifth device 25, and the sixth device 26 executing the communication program PC.

As described above, the activation request signal 64 is periodically sent. Each ECU periodically executes the processes illustrated in Fig. 13 while keeping the first communication unit 13 in the active state.

As shown in Fig. 13, in step S11, each ECU starts executing a setting process. In the setting process, each ECU determines whether it needs to request activation of the second communication unit 14 or the relay unit 71 of another ECU. Then, in the setting process, the ECU refers to the determination result to set the slot of the activation request signal 64 to 0 or 1, thereby generating the activation request signal 64.

The setting process is repeatedly executed until the slots corresponding to all the ECUs that are to receive the activation request signal 64 have been completely set (see step S17). In other words, in the setting process, the processes from step S12 to step S16 are executed for all the ECUs that are to receive the activation request signal 64.

The ECU that is to receive the activation request signal 64 includes the second communication unit 14 or the relay unit 71. For example, when the first device 21 executes the setting process, the first device 21 repeatedly executes the setting process until the slots corresponding to the second device 22, the third device 23, the fifth device 25, and the sixth device 26 have been completely set.

Upon starting the setting process, the ECU executes the process of step S12. In the process of step S12, the ECU determines whether it needs to request activation of the second communication unit 14 or the relay unit 71 of another ECU.

When the ECU performs the setting process for another ECU including the second communication unit 14 and needs to perform the second communication with the other ECU, the ECU determines that requesting activation of the second communication unit 14 is necessary. When the ECU performs the setting process for another ECU including the second communication unit 14 and does not need to perform the second communication with the other ECU, the ECU determines that requesting activation of the second communication unit 14 is unnecessary. For example, when the first device 21 performs the setting process on the second device 22, the fifth device 25, or the sixth device 26, the first device 21 determines the necessity of requesting activation of the second communication unit 14 based on whether there is a need to perform the second communication with these ECUs.

When the ECU performs the setting process for another ECU including the relay unit 71 and needs to perform the second communication with the other ECU, the ECU determines that requesting activation of the relay unit 71 is necessary. Also, when the ECU performs the setting process for another ECU including the relay unit 71 and needs to have the second communication relayed by the other ECU, the ECU determines that requesting activation of the relay unit 71 is necessary. When the ECU performs the setting process for another ECU including the relay unit 71 and the ECU neither needs to perform the second communication with the other ECU nor have the communication relayed by the other ECU, the ECU determines that requesting activation of the relay unit 71 is unnecessary. For example, when the first device 21 performs the setting process on the third device 23, the first device 21 determines the necessity of requesting activation of the relay unit 71 based on whether there is a need to perform the second communication with the third device 23 and whether there is a need to have the communication relayed by the third device 23.

When the ECU determines that requesting activation of the second communication unit 14 or the relay unit 71 of the other ECU is unnecessary (step S12: NO), the ECU proceeds to step S16. In the process of step S16, the ECU sets the slot corresponding to the ECU that does not need to request activation of the second communication unit 14 or the relay unit 71 to 0. Subsequently, the ECU ends the setting process for the ECU being processed.

When the ECU determines that requesting activation of the second communication unit 14 or the relay unit 71 of the other ECU is necessary (step S12: YES), the ECU proceeds to step S13. In the process of step S13, the ECU sets the slot corresponding to the ECU that needs to request activation of the second communication unit 14 or the relay unit 71 to 1. Subsequently, the ECU advances to step S14.

In the process of step S14, the ECU determines whether its activation flag is OFF. The ECU including the second communication unit 14 or the relay unit 71 manages the activation flag. The activation flag is used to manage whether to shift the second communication unit 14 or the relay unit 71 included in the ECU to the active state or the standby state. When the activation flag is in ON, it indicates that the second communication unit 14 or the relay unit 71 needs to be shifted to the active state. When the activation flag is OFF, it indicates that the second communication unit 14 or the relay unit 71 needs to be shifted to the standby state.

When determining that the activation flag under its management is OFF (step S14: YES), the ECU advances to step S15. In the process of step S15, the ECU switches the activation flag under its management from OFF to ON. Subsequently, the ECU ends the setting process for the ECU being processed.

When the ECU determines that the activation flag under its management is ON, that is, the activation flag is not OFF (step S14: NO), the ECU ends the setting process for the ECU being processed.

When the slots corresponding to all the ECUs that are to receive the activation request signal 64 are completely set, the ECU advances to step S17. When all the slots are completely set, the activation request signal 64 is generated. In the process of step S17, the ECU ends the setting process.

After completing the setting process, the ECU proceeds to step S18. In the process of step S18, the ECU sends the activation request signal 64 generated through the setting process. After sending the activation request signal 64, the ECU ends the series of processes illustrated in Fig. 13.

Processes Executed by the ECU upon Receiving Activation Request Signal 64

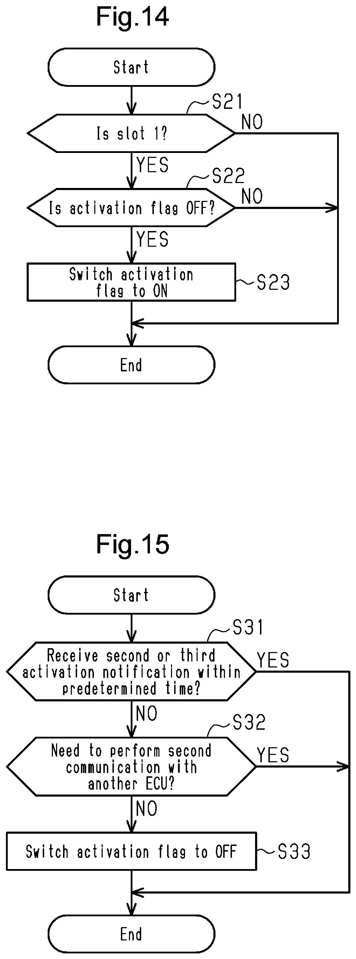

Fig. 14 illustrates a series of processes executed by the ECU upon receiving the activation request signal 64. The series of processes illustrated in Fig. 14 is executed by the processing circuitry 11 of each of the first device 21, the second device 22, the third device 23, the fifth device 25, and the sixth device 26 executing the communication program PC.

In the process of step S21, the ECU checks whether the slot corresponding to the ECU is 1 in the received activation request signal 64.

In a case in which the slot corresponding to the ECU is set to 0 in the received activation request signal 64, the ECU determines that the slot corresponding to the ECU is not 1 in the received activation request signal 64. When determining that the slot corresponding to the ECU is not 1 in the received activation request signal 64 (step S21: NO), the ECU ends the series of processes illustrated in Fig. 14.

In a case in which the slot corresponding to the ECU is set to 1 in the received activation request signal 64, the ECU determines that the slot corresponding to the ECU is 1 in the received activation request signal 64. When determining that the slot corresponding to the ECU is 1 in the received activation request signal 64 (step S21: YES), the ECU proceeds to step S22.

In the process of step S22, the ECU determines whether the activation flag is OFF.

When determining that the activation flag under its management is OFF (step S22: YES), the ECU proceeds to step S23. In the process of step S23, the ECU switches the activation flag under its management from OFF to ON. Then, the ECU ends the series of processes illustrated in Fig. 14.

When determining that the activation flag under its management is ON, that is, the activation flag is not OFF (step S24: NO), the ECU ends the series of processes illustrated in Fig. 14.

### Processes Executed by the ECU to Switch Activation Flag to OFF

Fig. 15 illustrates processes executed by the ECU to switch the activation flag to OFF. The series of processes illustrated in Fig. 15 is executed by the processing circuitry 11 of each of the first device 21, the second device 22, the third device 23, the fifth device 25, and the sixth device 26 executing the communication program PC.

When a predetermined time has elapsed since the ECU received the activation request signal 64 for requesting activation of its second communication unit 14 or relay unit 71, the ECU executes the series of processes illustrated in Fig. 15. That is, when the predetermined time has elapsed after the ECU received the activation request signal 64 in which the slot corresponding to the ECU is set to 1, the ECU executes the series of processes illustrated in Fig. 15.

Also, when the predetermined time has elapsed after the ECU sent the activation request signal 64 that requests activation of the second communication unit 14 or the relay unit 71 of another ECU, the ECU executes the series of processes illustrated in Fig. 15.

At the start of the series of processes illustrated in Fig. 15, the activation flag of the ECU that executes the processes is ON.

In the process of step S31, the ECU determines whether the second or third activation notification has been received within the predetermined time. When the ECU that has received the activation request signal 64 that requests activation of the second communication unit 14 or the relay unit 71 executes the series of processes illustrated in Fig. 15, the predetermined time spans from the receipt of the signal to the start of the series of processes illustrated in Fig. 15. When the ECU that has sent the activation request signal 64 that requests activation of the second communication unit 14 or the relay unit 71 of another ECU executes the series of processes illustrated in Fig. 15, the predetermined time spans from the transmission of the signal to the start of the series of processes illustrated in Fig. 15.

As described above, the ECU sends, as the second activation notification, the activation request signal 64 in which the slot corresponding to the ECU having the second communication unit 14 is set to 1. When the ECU including the second communication unit 14 has received the activation request signal 64 in which the slot corresponding to the ECU is set to 1 within the predetermined time, the ECU determines that the second activation notification has been received. When the ECU including the second communication unit 14 has not received the activation request signal 64 in which the slot corresponding to the ECU is set to 1 within the predetermined time, the ECU determines that the second activation notification has not been received.

As described above, the ECU sends, as the third activation notification, the activation request signal 64 in which the slot corresponding to the third device 23 (i.e., an ECU including the relay unit 71) is set to 1. When the third device 23 has received the activation request signal 64 in which the slot corresponding to the third device 23 is set to 1 within the predetermined time, the third device 23 determines that the third activation notification has been received. When the third device 23 has not received the activation request signal 64 in which the slot corresponding to the third device 23 has been set to 1 within the predetermined time, the third device 23 determines that the third activation notification has not been received.

When determining that the ECU has not received the second or third activation notification within the predetermined time (step S31: NO), the ECU proceeds to step S32.

In the process of step S32, the ECU determines whether it needs to perform the second communication with another ECU.

When determining that the ECU does not need to perform the second communication with another ECU (step S32: NO), the ECU proceeds to step S33. In the process of step S33, the ECU switches the activation flag to OFF. Then, the ECU ends the series of processes illustrated in Fig. 15.

When determining that the ECU has received the second or third activation notification within the predetermined time (step S31: YES), the ECU ends the series of processes illustrated in Fig. 15 without switching the activation flag to OFF. Also, when determining that the ECU needs to perform the second communication with another ECU (step S32: YES), the ECU ends the series of processes illustrated in Fig. 15 without switching the activation flag to OFF.

In this manner, the ECU switches the activation flag to OFF when activation of the second communication unit 14 or the relay unit 71 is not requested from another ECU and the ECU does not need to perform the second communication with the other ECU. The ECU keeps the activation flag ON when activation of the second communication unit 14 or the relay unit 71 is requested from another ECU or when the ECU needs to perform the second communication with the other ECU.

Processes that Control the State of the Second Communication Unit 14 or Relay Unit 71

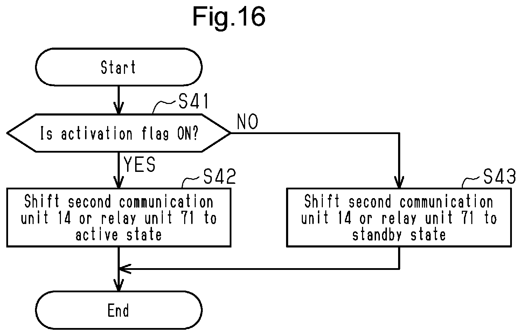

Fig. 16 illustrates processes executed when the ECU controls the state of the second communication unit 14 or the relay unit 71 based on the activation flag. The series of processes illustrated in Fig. 16 is executed by the processing circuitry 11 of each of the first device 21, the second device 22, the third device 23, the fifth device 25, and the sixth device 26 executing the communication program PC.

Each of the first device 21, the second device 22, the third device 23, the fifth device 25, and the sixth device 26 executes the series of processes illustrated in Fig. 16 when the state of the activation flag under its management is switched. In other words, the ECU including the second communication unit 14 or the relay unit 71 executes the series of processes illustrated in Fig. 16 when the activation flag under its management is shifted from OFF to ON or from ON to OFF.

In the process of step S41, the ECU determines whether its activation flag is ON. The ECU determines whether the activation flag is ON after the state of the flag has been switched.

When the activation flag is ON after the state of the flag has been switched, the ECU determines that its activation flag is ON. When determining that its activation flag is ON (step S41: YES), the ECU proceeds to step S42.

When the activation flag is switched from OFF to ON, the second communication unit 14 or the relay unit 71 remains in the standby state at the time of the switching. In the process of step S42, the ECU shifts the second communication unit 14 or the relay unit 71 from the standby state to the active state. In the process of step S42, each of the first device 21, the second device 22, the fifth device 25, and the sixth device 26 shifts the second communication unit 14 from the standby state to the active state. In the process of step S42, the third device 23 shifts the relay unit 71 from the standby state to the active state. Subsequently, the ECU ends the series of processes illustrated in Fig. 16.

When the activation flag is OFF after the state of the flag has been switched, the ECU determines that its activation flag is not ON. When determining that its activation flag is not ON (step S41: NO), the ECU proceeds to step S43.

When the activation flag is switched from ON to OFF, the second communication unit 14 or the relay unit 71 remains in the active state at the time of the switching. In the process of step S43, the ECU shifts the second communication unit 14 or the relay unit 71 from the active state to the standby state. In the process of step S43, each of the first device 21, the second device 22, the fifth device 25, and the sixth device 26 shifts its second communication unit 14 from the active state to the standby state. In the process of step S43, the third device 23 shifts the relay unit 71 from the active state to the standby state. Subsequently, the ECU ends the series of processes illustrated in Fig. 16.

Example of how an ECU Controls the Second Communication Unit 14 and Relay Unit 71

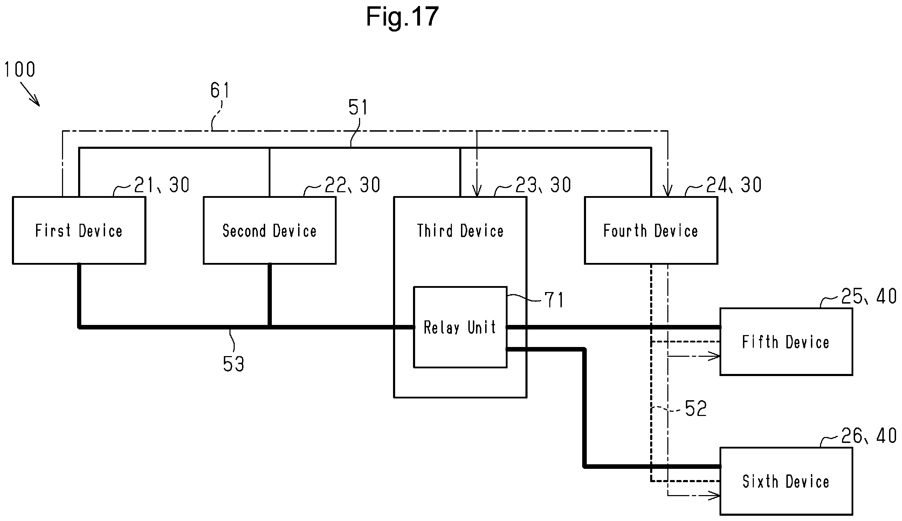

With reference to Figs. 17 to 20, how an ECU controls the second communication unit 14 and the relay unit 71 of another ECU to perform the second communication will now be described in detail. Figs. 17 to 20 illustrate communication performed when the first device 21 performs the second communication with the fifth device 25.

Fig. 17 illustrates how the first device 21 sends the first message 61, which is the first activation notification. The arrow of the single-dashed line illustrated in Fig. 17 is connected to an ECU that activates the first communication unit 13 in response to receiving the first message 61.

As described above with reference to Fig. 10, when an ECU performs the second communication with another ECU, the ECU sends the first activation notification to the other ECU, which is to be communicated with.

As shown in Fig. 17, the first device 21 sends the first message 61 to the fifth device 25 via the fourth device 24. The first device 21 needs to activate the first communication unit 13 of the fourth device 24 in order to have the first message 61 relayed to the fifth device 25.

The first device 21 sends a PN message including an identifier indicating the fifth device 25 and an identifier indicating the fourth device 24, as the first message 61, via the first communication bus 51.

In Fig. 17, after receiving a PN message addressed to the fourth device 24 via the first communication bus 51, the fourth device 24 activates the first communication unit 13 and relays the first message 61 to the second communication bus 52. Since the fifth device 25 that has received a PN message via the second communication bus 52 is an NM device 40, the fifth device 25 activates the first communication unit 13 without checking the destination.

As described above with reference to Fig. 1, the first device 21 needs to be relayed by the third device 23 when communicating with the fifth device 25 through the second communication.

As described above with reference to Fig. 11, an ECU sends the first activation notification to the third device 23 when the relay by the relay unit 71 is necessary.

As shown in Fig. 17, the first device 21 also sends the first message 61 to the third device 23. The first message 61 sent from the first device 21 via the first communication bus 51 is a PN message that also includes an identifier indicating the third device 23.

In Fig. 17, after receiving a PM message addressed to the third device 23 via the first communication bus 51, the third device 23 activates the first communication unit 13.

When the first device 21 sends the first activation notification, the second device 22 receives the first activation notification via the first communication bus 51. The second device 22 that has received a PN message from the first device 21 is a PN device 30. Thus, the second device 22 confirms that the PN message is not addressed to the second device 22 and refrains from activating the first communication unit 13.

When the fourth device 24 relays the first activation notification received via the first communication bus 51 to the second communication bus 52, the sixth device 26 receives the first activation notification via the second communication bus 52. In Fig. 17, since the sixth device 26 that has received a PN message via the second communication bus 52 is an NM device 40, the sixth device 26 activates the first communication unit 13 regardless of whether activation of the first communication unit 13 has been requested.

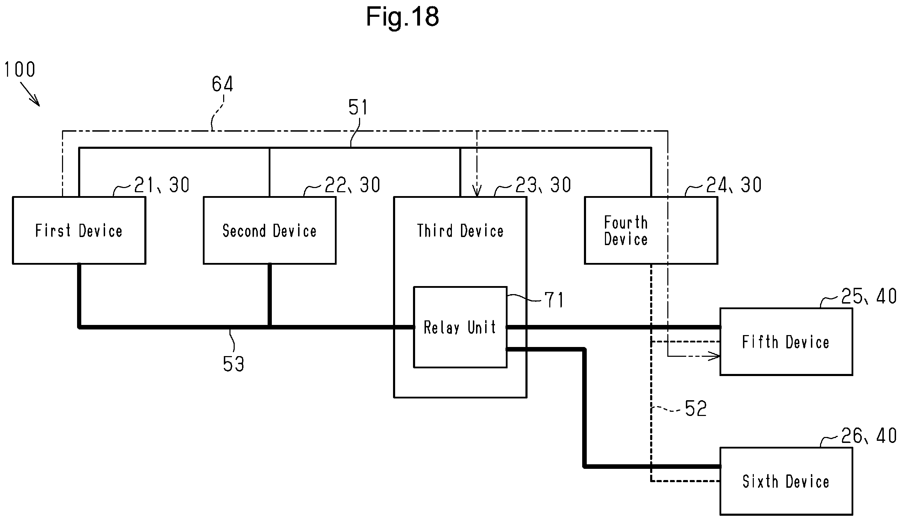

Fig. 18 illustrates how the first device 21 sends the activation request signal 64 through the first communication after the communication illustrated in Fig. 17 is executed. The arrow of the double-dashed line illustrated in Fig. 18 is connected to an ECU that activates the second communication unit 14 or the relay unit 71 in response to receiving the activation request signal 64.

As described above with reference to Fig. 10, the ECU sends the first activation notification to another ECU to be communicated with in the second communication, and then sends the second activation notification to the other ECU. As shown in Fig. 18, the first device 21 sends the activation request signal 64 to the second communication bus 52 through the first communication.

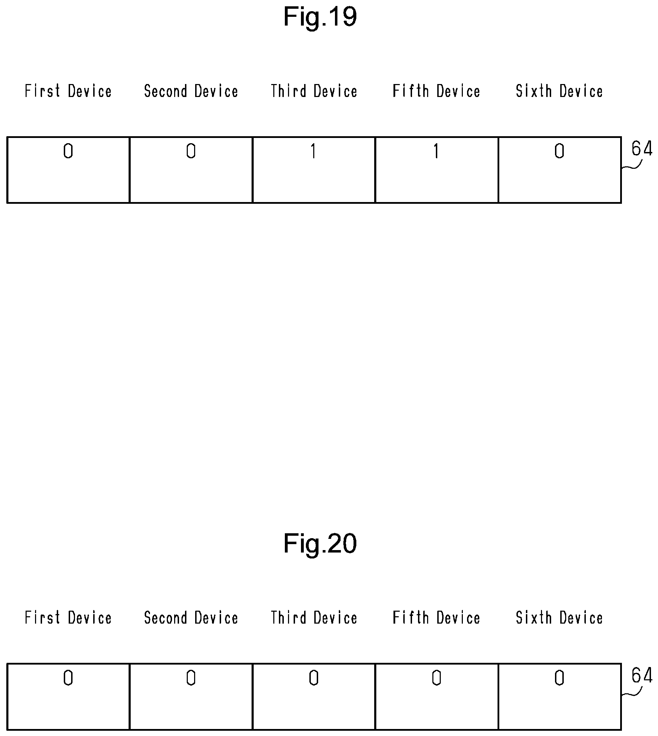

Fig. 19 illustrates the activation request signal 64 sent by the first device 21 to perform the second communication with the fifth device 25. In the activation request signal 64 illustrated in Fig. 19, the slot corresponding to the fifth device 25 is set to 1. The activation request signal 64 illustrated in Fig. 19 functions as the second activation notification to the fifth device 25.

In Fig. 18, the fifth device 25 that has received the activation request signal 64 acknowledges that the slot corresponding to the fifth device 25 is set to 1, and then activates the second communication unit 14.

As described above with reference to Fig. 11, the ECU sends the first activation notification to the third device 23, and then sends the third activation notification to the third device 23. As shown in Fig. 18, the first device 21 sends the activation request signal 64 to the first communication bus 51 through the first communication.

In the activation request signal 64 illustrated in Fig. 19, the slot corresponding to the third device 23 is set to 1. Accordingly, the activation request signal 64 illustrated in Fig. 19 functions as the third activation notification to the third device 23.

In Fig. 18, the third device 23 that has received the activation request signal 64 acknowledges that the slot corresponding to the third device 23 is set to 1, and then activates the relay unit 71.

In the activation request signal 64 illustrated in Fig. 19, the slots corresponding to the ECUs other than the third device 23 and the fifth device 25 are set to 0. Thus, the second device 22 and the sixth device 26 do not activate the second communication unit 14.

In Fig. 19, while the activation request signal 64 has a slot corresponding to the first device 21, the value of the slot does not affect the second communication unit 14 of the first device 21. The activation request signal 64 does not have to include a slot corresponding to the ECU that sends the signal, and the slot may be constantly set to 0 or 1.

In Fig. 18, when the first device 21 sends the activation request signal 64 as illustrated in Fig. 19, the second communication unit 14 of the fifth device 25 and the relay unit 71 of the third device 23 are activated. This allows the first device 21 to perform the second communication with the fifth device 25 via the third communication bus 53.

In Fig. 18, when the first device 21 sends the activation request signal 64 as shown in Fig. 19, the second communication units 14 of the second device 22 and the sixth device 26 are not activated. Thus, in the in-vehicle network system 100, the second communication unit 14 of the ECU that has not received the second activation notification is prevented from being activated. Such an advantage is particularly effective for the NM device 40 in which the identifier indicating the destination cannot be checked.

Fig. 20 illustrates the activation request signal 64 sent by the first device 21 to stop the second communication with the fifth device 25. In Fig. 20, the slots corresponding to the third device 23 and the fifth device 25 are set to 0.

In the same manner as the activation request signal 64 illustrated in Fig. 19, the activation request signal 64 illustrated in Fig. 20 is sent in the manner shown in Fig. 18. After receiving the activation request signal 64 illustrated in Fig. 20, the fifth device 25 that has activated the second communication unit 14 stops receiving the activation request signal 64 in which the corresponding slot is set to 1. This causes the fifth device 25 to shift the second communication unit 14 to the standby state. After receiving the activation request signal 64 illustrated in Fig. 20, the third device 23 that has activated the relay unit 71 stops receiving the activation request signal 64 in which the corresponding slot is set to 1. This causes the third device 23 to shift the relay unit 71 to the standby state.

In this manner, when stopping the second communication, the first device 21 shifts the second communication unit 14, which is to be communicated with, and the relay unit 71, which has relayed the second communication, to the standby state.

Such a configuration allows an ECU to activate the second communication unit 14 and the relay unit 71 only when necessary by sending the second and third activation notifications through the first communication. Such an advantage is particularly effective for the NM device 40 in which the identifier indicating the destination cannot be checked.

### Operation of the Present Embodiment

Prior to performing the second communication, each of the first device 21, the second device 22, the third device 23, the fifth device 25, and the sixth device 26 requests the device to be communicated with in the second communication to activate the second communication unit 14 through the first communication.

### Advantages of the Present Embodiment

(1) Each of the first device 21, the second device 22, the third device 23, the fifth device 25, and the sixth device 26 is configured to activate the second communication unit 14 only when it needs to perform the second communication.
(2) Each of the first device 21, the second device 22, the third device 23, the fifth device 25, and the sixth device 26 is configured to execute the second communication with other ECUs. Prior to performing the second communication, each of the first device 21, the second device 22, the third device 23, the fifth device 25, and the sixth device 26 sends the second activation notification to specify one of the other ECUs that is to be communicated with in the second communication.
   Each of the first device 21, the second device 22, the third device 23, the fifth device 25, and the sixth device 26 sends the second activation notification to specify one of the other ECUs that is to be communicated with in the second communication. This allows each of the first device 21, the second device 22, the third device 23, the fifth device 25, and the sixth device 26 to activate only the second communication unit 14 of a specific ECU.
(3) The in-vehicle network system 100 includes the third device 23, which is the relay device. The third device 23 includes, as the communication devices, the relay unit 71, which relays the second communication performed between the ECUs, and the first communication unit 13. The third device 23 has the network management function. Each of the first device 21, the second device 22, the fifth device 25, and the sixth device 26 sends the third activation notification, which is a message requesting activation of the relay unit 71, to the third device 23 through the first communication before performing the second communication with another ECU.
   Each of the first device 21, the second device 22, the fifth device 25, and the sixth device 26 requests activation of the relay unit 71 through the first communication when it needs to perform the second communication with another ECU through the relay unit 71 of the third device 23. This allows each of the first device 21, the second device 22, the fifth device 25, and the sixth device 26 to activate the relay unit 71 only when necessary.
(4) Each of the first device 21, the second device 22, the fifth device 25, and the sixth device 26 determines the necessity of activating the second communication unit 14 based on whether it has received the second activation notification. This allows each of the first device 21, the second device 22, the fifth device 25, and the sixth device 26 to activate the second communication unit 14 only when it needs to perform the second communication.
(5) Each of the first device 21, the second device 22, the fifth device 25, and the sixth device 26 maintains the second communication unit 14 in the active state while periodically receiving the second activation notification. Each of the first device 21, the second device 22, the fifth device 25, and the sixth device 26 shifts the second communication unit 14 from the active state to the standby state when it has not received the second activation notification for a predetermined time or longer.
   Each of the first device 21, the second device 22, the fifth device 25, and the sixth device 26 shifts the second communication unit 14 to the standby state when it no longer receives the second activation notification. This allows the first device 21, the second device 22, the fifth device 25, and the sixth device 26 to shift the second communication unit 14 to the standby state when it no longer needs to perform the second communication.
(6) Each of the first device 21, the second device 22, the third device 23, the fifth device 25, and the sixth device 26 periodically sends the second activation notification to another ECU while it needs to perform the second communication with the other ECU. Each of the first device 21, the second device 22, the third device 23, the fifth device 25, and the sixth device 26 stops periodically sending the second activation notification to the other ECU when stopping the second communication with the other ECU.
   Each of the first device 21, the second device 22, the third device 23, the fifth device 25, and the sixth device 26 stops sending the second activation notification when it no longer needs to perform the second communication. This allows the first device 21, the second device 22, the third device 23, the fifth device 25, and the sixth device 26 to shift the second communication unit 14 of a device to be communicated with to the standby state when it no longer needs to perform the second communication.
(7) Prior to performing the second communication, an ECU performs the first communication to activate the second communication unit 14 to be communicated with in the second communication. This allows the in-vehicle network system 100 to activate the second communication unit 14 only when the ECU needs to perform the second communication.
(8) An ECU periodically sends the second activation notification to another ECU while the ECU needs to perform the second communication with the other ECU. The ECU stops sending the second activation notification to the other ECU when stopping the second communication with the other ECU. The other ECU maintains the second communication unit 14 in the active state while periodically receiving the second activation notification. When the other ECU has not received the second activation notification for a predetermined time or longer, the other ECU shifts the second communication unit 14 from the active state to the standby state.
   The ECU that has sent the second activation notification stops sending the second activation notification when it no longer needs to perform the second communication. The ECU that has received the second activation notification shifts the second communication unit 14 to the standby state when it no longer receives the second activation notification. This allows the in-vehicle network system 100 to shift the second communication unit 14 to the standby state when it no longer needs to perform the second communication.
(9) The in-vehicle network system 100 includes the third device 23, which is the relay device. The third device 23 includes, as the communication devices, the relay unit 71, which relays the second communication performed between the ECUs, and the first communication unit 13. The third device 23 has the network management function. Each ECU sends the third activation notification, which is a message requesting activation of the relay unit 71, to the third device 23 through the first communication before performing the second communication with another ECU. When receiving the third activation notification, the third device 23 shifts the relay unit 71 from the standby state to the active state.
   When the ECUs need to perform the second communication with each other through the relay unit 71 of the third device 23, the third device 23 activates the relay unit 71 based on the third activation notification. This allows the in-vehicle network system 100 to activate the relay unit 71 only when necessary.
(10) The communication method includes activating, by each ECU, the second communication unit 14 to be communicated with in the second communication through the first communication prior to performing the second communication. This allows the second communication unit 14 to be activated only when the ECU needs to perform the second communication.
(11) The communication program PC includes causing each ECU to activate the second communication unit 14 to be communicated with in the second communication through the first communication before the ECU performs the second communication. This allows the communication program PC to activate the second communication unit 14 only when the ECU needs to perform the second communication.
(12) The communication program PC causes each ECU to determine the necessity of activating the second communication unit 14 based on whether it has received the second activation notification through the first communication. This allows the communication program PC to activate the second communication unit 14 only when it needs to perform the second communication.

### Modifications

The present embodiment may be modified as follows. The present embodiment and the following modifications can be combined if the combined modifications remain technically consistent with each other.

The in-vehicle network system 100 does not need to have the configuration illustrated in Fig. 1.

For example, the number of ECUs in the in-vehicle network system 100 is not limited to that shown in Fig. 1.

For example, the ratio between the number of PN devices 30 and the number of NM devices 40 in the in-vehicle network system 100 is not limited to that in the above-described embodiment. The in-vehicle network system 100 may include only PN devices 30 or may include only NM devices 40.

The topology of the in-vehicle network system 100 is not limited to that of the above-described embodiment. The in-vehicle network system 100 does not have to include an ECU that functions as the relay device. In this case, the ECU does not have to send the third activation notification.

The first communication standard is not limited to CAN. For example, the first communication standard may be Ethernet^{®}. For example, the first communication standard may be CAN with flexible data rate (CANFD).

The second communication standard is not limited to Ethernet^{®}. For example, the second communication standard may be CAN. The second communication standard may be CANFD.

In the above-described embodiment, the fourth device 24 may check the received message and then relay the message only when determining that it needs to send the received message to another communication bus. The fourth device 24 may relay the received message without checking the necessity of relaying the message.

In the above-described embodiment, the third device 23 checks the destination of the received message when relaying the second communication. Then, the third device 23 sends the received message to the destination of the message using the relay unit 71. Instead, when relaying the second communication, the third device 23 may send a message to all the ECUs connected to the relay unit 71 without checking the destination of the message.

In the above-described embodiment, the relay unit 71 functions to relay the second communication between the ECUs and functions as the second communication unit 14. The relay unit 71 does not need to function as the second communication unit 14.

In the above-described embodiment, an NM device 40 is unable to activate the second communication unit 14 of a PN device 30 by sending the first and second activation notifications.

Instead, the PN device 30 may activate the first communication unit 13 upon receiving an NM message. This allows the NM device 40 to activate the second communication unit 14 of the PN device 30 by sending the first and second activation notifications.

In the above-described embodiment, an NM device 40 is unable to activate the relay unit 71 of a PN device 30 by sending the first and second activation notifications.

Instead, the PN device 30 may activate the first communication unit 13 upon receiving an NM message. This allows the NM device 40 to activate the relay unit 71 of the PN device 30 by sending the first and second activation notifications.

In the above-described embodiment, the first device 21 sends, to the fifth device 25, a PN message including the identifier indicating the fifth device 25 as the first message 61. That is, the PN device 30 sends a PN message as the first activation notification to the NM device 40. Instead, the PN device 30 may send an NM message as the first activation notification to the NM device 40.

In the above-described embodiment, each ECU uses a slot of the activation request signal 64 to specify another ECU for which the second communication unit 14 or the relay unit 71 is requested to be activated. However, the manner in which each ECU specifies another ECU for which the second communication unit 14 or the relay unit 71 is requested to be activated is not limited to that of above-described embodiment. For example, each ECU may specify another ECU for which the second communication unit 14 or the relay unit 71 is requested to be activated, by sending the second activation notification including the identifier indicating the identification information of the destination.

In the above-described embodiment, each ECU specifies another ECU for which the second communication unit 14 or the relay unit 71 is requested to be activated. However, each ECU does not have to specify another ECU for which the second communication unit 14 or the relay unit 71 is requested to be activated. In this case, the ECU having the second communication unit 14 receives a message requesting activation of the second communication unit 14 as the second activation notification, thereby activating the second communication unit 14. The ECU including the relay unit 71 receives a message requesting activation of the relay unit 71 as the third activation notification, thereby activating the relay unit 71.

In the above-described embodiment, each ECU periodically sends the second activation notification as long as it requests activation of the second communication unit 14. Instead of periodically sending the second activation notification, each ECU may send a message requesting the second communication unit 14 to shift to the standby state when it no longer needs to request activation of the second communication unit 14 after sending the second activation notification once.

In the above-described embodiment, each ECU periodically sends the third activation notification as long as it requests activation of the relay unit 71. Instead of periodically sending the third activation notification, each ECU may send a message requesting the relay unit 71 to shift to the standby state when it no longer needs to request activation of the relay unit 71 after sending the third activation notification once.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electronic control unit that is one of multiple electronic control units included in an in-vehicle network system (100), the electronic control unit comprising:
communication units each configured to be switched between a standby state, in which a communication function is restricted, and an active state, in which the restriction of the communication function is lifted, wherein
the communication units include:
a first communication unit (13) configured to execute first communication that is based on a first communication standard; and
a second communication unit (14) configured to execute second communication that is based on a second communication standard, the second communication standard being different from the first communication standard,
the electronic control unit has a network management function of shifting the first communication unit (13) from the standby state to the active state in response to receiving a first activation notification through the first communication, the first activation notification being a message requesting activation of the first communication unit (13), and
the electronic control unit is configured to:
send a second activation notification through the first communication, the second activation notification being a message requesting activation of the second communication unit (14) of an other electronic control unit; and
start the second communication with the other electronic control unit after sending the second activation notification.

2. The electronic control unit according to claim 1, wherein
the other electronic control unit is one of other electronic control units, and
the second activation notification includes information indicating an other one of the other electronic control units that is to be communicated with in the second communication.

3. The electronic control unit according to claim 1 or 2, wherein
at least one of the electronic control units included in the in-vehicle network system (100) is a relay device,
the relay device includes a relay unit (71), the relay unit (71) functioning as the second communication unit (14) and being configured to relay the second communication executed between two of the electronic control units, and
the electronic control unit is configured to:
send a third activation notification to the relay device through the first communication, the third activation notification being a message requesting activation of the relay unit (71); and
start the second communication with the other electronic control unit after sending the third activation notification.

4. An electronic control unit that is one of multiple electronic control units included in an in-vehicle network system (100), the electronic control unit comprising:
communication units each configured to be switched between a standby state, in which a communication function is restricted, and an active state, in which the restriction of the communication function is lifted, wherein
the communication units include:
a first communication unit (13) configured to execute first communication that is based on a first communication standard; and
a second communication (14) unit configured to execute second communication that is based on a second communication standard, the second communication standard being different from the first communication standard,
the electronic control unit has a network management function of shifting the first communication unit (13) from the standby state to the active state in response to receiving a first activation notification through the first communication, the first activation notification being a message requesting activation of the first communication unit (13), and
the electronic control unit is configured to shift the second communication unit (14) from the standby state to the active state in response to receiving a second activation notification from an other electronic control unit through the first communication, the second activation notification being a message requesting activation of the second communication unit (14).

5. The electronic control unit according to any one of claims 1 to 4, wherein
the electronic control unit is configured to:
maintain the second communication unit (14) in the active state while periodically receiving the second activation notification; and
shift the second communication unit (14) from the active state to the standby state when the second activation notification has not been received for a predetermined time or longer.

6. The electronic control unit according to claim 5, wherein
the electronic control unit is configured to:
periodically send the second activation notification to the other electronic control unit while executing the second communication with the other electronic control unit; and
stop sending the second activation notification to the other electronic control unit to stop the second communication with the other electronic control unit.

7. An in-vehicle network system (100), comprising the electronic control units including at least a first electronic control unit and a second electronic control unit, wherein
each of the electronic control units comprises communication units each configured to be switched between a standby state, in which a communication function is restricted, and an active state, in which the restriction of the communication function is lifted,
the communication units include:
a first communication unit (13) configured to execute first communication that is based on a first communication standard; and
a second communication unit (14) configured to execute second communication that is based on a second communication standard, the second communication standard being different from the first communication standard, and
each of the electronic control units has a network management function of shifting the first communication unit (13) from the standby state to the active state in response to receiving a first activation notification through the first communication, the first activation notification being a message requesting activation of the first communication unit (13),
the first electronic control unit is configured to:
send a second activation notification through the first communication, the second activation notification being a message requesting activation of the second communication unit (14) of the second electronic control unit; and
start the second communication with the second electronic
control unit after sending the second activation notification, and
the second electronic control unit is configured to shift the second communication unit (14) from the standby state to the active state in response to receiving the second activation notification through the first communication.

8. The in-vehicle network system (100) according to claim 7, wherein
the first electronic control unit is configured to:
periodically send the second activation notification to the second electronic control unit while executing the second communication with the second electronic control unit; and
stop sending the second activation notification to the second electronic control unit to stop the second communication with the second electronic control unit, and
the second electronic control unit is configured to:
maintain the second communication unit (14) in the active state while periodically receiving the second activation notification; and
shift the second communication unit (14) from the active state to the standby state when the second activation notification has not been received for a predetermined time or longer.

9. The in-vehicle network system (100) according to claim 7 or 8, wherein
at least one of the electronic control units included in the in-vehicle network system (100) is a relay device,
the relay device includes a relay unit (71), the relay unit (71) functioning as the second communication unit (14) and being configured to relay the second communication executed between the first electronic control unit and the second electronic control unit,
the first electronic control unit is configured to:
send a third activation notification to the relay device through the first communication, the third activation notification being a message requesting activation of the relay unit (71); and
start the second communication with the second electronic
control unit after sending the third activation notification, and
the relay device is configured to shift the relay unit (71) from the standby state to the active state in response to receiving the third activation notification.

10. A communication method for an in-vehicle network system (100), wherein
the in-vehicle network system (100) includes at least a first electronic control unit and a second electronic control unit,
each of the first and second electronic control units includes communication units each configured to be switched between a standby state, in which a communication function is restricted, and an active state, in which the restriction of the communication function is lifted,
the communication units include:
a first communication unit (13) configured to execute first communication that is based on a first communication standard; and
a second communication unit (14) configured to execute second communication that is based on a second communication standard, the second communication standard being different from the first communication standard,
each of the first and second electronic control units has a network management function of shifting the first communication unit (13) from the standby state to the active state in response to receiving a first activation notification through the first communication, the first activation notification being a message requesting activation of the first communication unit (13), and
the communication method comprises:
sending, by the first electronic control unit, a second activation notification through the first communication, the second activation notification being a message requesting activation of the second communication unit (14) of the second electronic control unit;
starting, by the first electronic control unit, the second communication with the second electronic control unit after sending the second activation notification; and
shifting, by the second electronic control unit, the second communication unit (14) from the standby state to the active state in response to receiving the second activation notification through the first communication.

11. A communication program (PC) executed by processing circuitry (11) of each of multiple electronic control units included in an in-vehicle network system (100), wherein
each of the electronic control units includes communication units each configured to be switched between a standby state, in which a communication function is restricted, and an active state, in which the restriction of the communication function is lifted,
the communication units include:
a first communication unit (13) configured to execute first communication that is based on a first communication standard; and
a second communication unit (14) configured to execute second communication that is based on a second communication standard, the second communication standard being different from the first communication standard,
each of the electronic control units has a network management function of shifting the first communication unit (13) from the standby state to the active state in response to receiving a first activation notification through the first communication, the first activation notification being a message requesting activation of the first communication unit (13), and
the communication program (PC) is configured to cause the processing circuitry (11) of each of the electronic control units to:
send a second activation notification through the first communication, the second activation notification being a message requesting activation of the second communication unit (14) of an other electronic control unit; and
start the second communication with the other electronic control unit after sending the second activation notification.

12. A communication program (PC) executed by processing circuitry (11) of each of multiple electronic control units included in an in-vehicle network system (100), wherein
each of the electronic control units includes communication units each configured to be switched between a standby state, in which a communication function is restricted, and an active state, in which the restriction of the communication function is lifted,
the communication units include:
a first communication unit (13) configured to execute first communication that is based on a first communication standard; and
a second communication unit (14) configured to execute second communication that is based on a second communication standard, the second communication standard being different from the first communication standard,
each of the electronic control units has a network management function of shifting the first communication unit (13) from the standby state to the active state in response to receiving a first activation notification through the first communication, the first activation notification being a message requesting activation of the first communication unit (13), and
the communication program (PC) is configured to cause the processing circuitry (11) of each of the electronic control units to shift the second communication unit (14) from the standby state to the active state in response to receiving a second activation notification from an other electronic control unit through the first communication, the second activation notification being a message requesting activation of the second communication unit (14).
